# EUROPEAN PATENT SPECIFICATION

(11) **EP 3 461 872 B1**
(45) Date of publication and mention of the grant of the patent: **09.11.2022**
(21) Application number: 18206801.5
(22) Date of filing: 12.01.2007
(51) Int. Cl.: C09K 5/04

(54) **REFRIGERANT ADDITIVE COMPOSITIONS CONTAINING PERFLUOROPOLYETHERS**
KÜHLMITTELZUSATZ MIT PERFLUORPOLYETHERN
COMPOSITIONS ADDITIVES POUR RÉFRIGÉRANT CONTENANT DES PERFLUOROPOLYÉTHERS

(30) Priority: 13.01.2006 US 75873506 P
(43) Date of publication of application: 03.04.2019
(62) Divisional of application: 07709717.8
(73) Proprietor: The Chemours Company FC, LLC, Wilmington DE 19801 (US)
(72) Inventor: LECK, Thomas, Joseph, Hockessin, DE Delaware 19707 (US); SATURNO, Thomas, Frank, New Castle, DE Delaware 19720 (US); BELL, Gregory, A., Eagle, Idaho 83616 (US)
(74) Representative: Dehns

(56) References cited:
- EP-A- 1 306 417
- EP-A- 1 325 949
- EP-A1- 0 432 273
- EP-A2- 1 275 678
- WO-A-02/38718
- JP-A- S62 288 692

## Description

### BACKGROUND OF THE INVENTION

The present invention relates to compositions and processes for use in heat transfer, refrigeration and air-conditioning systems to improve the oil return, lubrication, energy efficiency, or reduce compressor wear, by using perfluoropolyether as an additive in the refrigerant or heat transfer fluid composition.

Lubricants have been used with the fluids in the heat transfer, refrigeration and air-conditioning systems to provide lubrication to the compressor and other moving parts and reduce compressor wear. However, not all the refrigerants or heat transfer fluids are compatible with all the lubricants. In particular, many HFC refrigerants or heat transfer fluids have poor miscibility or poor dispersibility with commonly used lubricants, such as mineral oil and alkylbenzene. Because the heat transfer fluids can not readily transport mineral oil lubricants through the heat exchangers, the lubricant oils accumulate on the surface of the heat exchange coils, resulting in poor oil return, poor heat exchange, low energy efficiency and the accelerated wear and tear of the compressors. As a result, the refrigeration and air conditioning industries have had to turn to the use of synthetic lubricants such as polyol esters and polyalkylene glycols.

Documents JPS62288692 and WO02/38718 disclose perfluoropolyethers (PFPEs) in combination with oils selected from mineral oil, alkylbenzenes, or polybutenes, whereas document EP0432273 discloses tetrafluoroethane (e.g. HFC-134a) or CFC-12 (i.e. 1,1-dichloro-1,1-difluoromethane) in combination with PFPEs and various oils.

There is a need for refrigerant additives to improve energy efficiency with such refrigerants.

### BRIEF SUMMARY OF THE INVENTION

The present invention relates to a composition including: (1) a synthetic oil selected from the group consisting of polyol esters (POE), polyvinyl ethers and combinations thereof, and (2) perfluoropolyether. This invention also relates to a composition further comprising a refrigerant or heat transfer fluid selected from the group consisting of saturated fluorocarbons, unsaturated fluorocarbons, hydrochlorofluorocarbons, fluoroethers, hydrocarbons, carbon dioxide, dimethyl ether, ammonia and combinations thereof.

This invention further relates to methods of using the refrigeration or heat transfer fluid compositions of the present invention for producing refrigeration or heating.

This invention further relates to processes for the transfer of heat from a heat source to a heat sink wherein the refrigeration or heat transfer fluid compositions of the present invention serve as heat transfer fluids.

### DETAILED DESCRIPTION OF THE INVENTION

Lubricants used in this invention are synthetic lubricant oils selected from polyol esters, polyvinyl ethers, and combinations thereof.

In one embodiment of this invention, the amount of perfluoropolyether is less than 50% by weight relative to the oil.

Preferably, the amount of perfluoropolyether is less than 20% by weight relative to the oil. More preferably, the amount of perfluoropolyether is less than 5% by weight relative to the oil. Most preferably, the amount of perfluoropolyether is less than 3 wt.% relative to the oil.

The present invention also provides perfluoropolyethers as an additive which is miscible with chlorofluorocarbon and hydrofluorocarbon refrigerants or heat transfer fluids. A common characteristic of perfluoropolyethers is the presence of perfluoroalkyl ether moieties. Perfluoropolyether is synonymous to perfluoropolyalkylether. Other synonymous terms frequently used include "PFPE", "PFAE", "PFPE oil", "PFPE fluid", and "PFPAE". For example, KRYTOX available from DuPont is a perfluoropolyether having the formula of CF₃-(CF₂)₂-O-[CF(CF₃)-CF₂-O]j'-R'f. In the formula, j' is 2 - 100, inclusive and R'f is CF₂CF₃, a C3 to C6 perfluoroalkyl group , or combinations thereof.

Other PFPEs including the FOMBLIN and GALDEN fluids, available from Ausimont, Milan, Italy and produced by perfluoroolefin photooxidation, can also be used. FOMBLIN-Y can have the formula of CF₃O(CF₂CF(CF₃)-O-)_{m'}-(CF₂-O-)_{n'}--R_{1f}. Also suitable is CF₃O[CF₂CF(CF₃)O]_{m'}(CF₂CF₂O)_{o'}(CF₂O)_{n'}-R_{1f}. In the formulae R_{1f} is CF₃, C₂F₅, C₃F₇, or combinations of two or more thereof; (m' + n') is 8 - 45, inclusive; and m/n is 20 - 1000, inclusive; o' is 1; (m'+n'+o') is 8 - 45, inclusive; m'/n' is 20 - 1000, inclusive.

FOMBLIN-Z can have the formula of CF₃O(CF₂CF₂-O-)_{p'}(CF₂-O)_{q'}CF₃ where (p' + q') is 40 - 180 and p'/q' is 0.5 - 2, inclusive.

DEMNUM fluids, another family of PFPE available from Daikin Industries, Japan, can also be used. It can be produced by sequential oligomerization and fluorination of 2,2,3,3-tetrafluorooxetane, yielding the formula of F-[(CF₂)₃-O]_{t'}-R_{2f} where R2f is CF₃, C₂F₅, or combinations thereof and t' is 2 - 200, inclusive.

The two end groups of the perfluoropolyether, independently, can be functionalized or unfunctionalized. In an unfunctionalized perfluoropolyether, the end group can be branched or straight chain perfluoroalkyl radical end groups. Examples of such perfluoropolyethers can have the formula of C_{r'}F_{(2r'+1)}-A-C_{r'}F_{(2r'+1)} in which each r' is independently 3 to 6; A can be O-(CF(CF₃)CF₂-O)_{w'}, O-(CF₂-O)_{x'}(CF₂CF₂-O)_{y'}, O-(C₂F₄-O)_{w'}, O-(C₂F₄-O)_{x'}(C₃F₆-O)_{y'}, O-(CF(CF₃)CF₂-O)_{x'}(CF₂-O)_{y'}, O-(CF₂CF₂CF₂-O)_{w'}, O-(CF(CF₃)CF₂-O))_{x'}(CF₂CF₂-O)_{y'}-(CF₂-O)_{z'}, or combinations of two or more thereof; preferably A is O-(CF(CF₃)CF₂-O)_{w'}, O-(C₂F₄-O)_{w'}, O-(C₂F₄-O)_{x'}(C₃F₆-O)_{y'}, O-(CF₂CF₂CF₂-O)_{w'}, or combinations of two or more thereof; w' is 4 to 100; x' and y' are each independently 1 to 100. Specific examples include, but are not limited to, F(CF(CF₃)-CF₂-O)₉-CF₂CF₃, F(CF(CF₃)-CF₂-O)₉-CF(CF₃)₂, and combinations thereof. In such PFPEs, up to 30% of the halogen atoms can be halogens other than fluorine, such as, for example, chlorine atoms.

The two end groups of the perfluoropolyether, independently, can also be functionalized. A typical functionalized end group can be selected from the group consisting of esters, hydroxyls, amines, amides, cyanos, carboxylic acids and sulfonic acids

Representative ester end groups include -COOCH₃, -COOCH₂CH₃, -CF₂COOCH₃, -CF₂COOCH₂CH₃, -CF₂CF₂COOCH₃, - CF₂CF₂COOCH₂CH₃, -CF₂CH₂COOCH₃, -CF₂CF₂CH₂COOCH₃, - CF₂CH₂CH₂COOCH₃, -CF₂CF₂CH₂CH₂COOCH₃.

Representative hydroxyl end groups include -CF₂OH, -CF₂CF₂OH, -CF₂CH₂OH, -CF₂CF₂CH₂OH, -CF₂CH₂CH₂OH, -CF₂CF₂CH₂CH₂OH.

Representative amine end groups include -CF₂NR¹R², - CF₂CF₂NR¹R², -CF₂CH₂NR¹R², -CF₂CF₂CH₂NR¹R², -CF₂CH₂CH₂NR¹R², - CF₂CF₂CH₂CH₂NR¹R², wherein R¹ and R² are independently H, CH₃, or CH₂CH₃.

Representative amide end groups include -CF₂C(O)NR¹R², - CF₂CF₂C(O)NR¹R², -CF₂CH₂C(O)NR¹R², -CF₂CF₂CH₂C(O)NR¹R², - CF₂CH₂CH₂C(O)NR¹R², -CF₂CF₂CH₂CH₂C(O)NR¹R², wherein R¹ and R² are independently H, CH₃, or CH₂CH₃.

Representative cyano end groups include -CF₂CN, -CF₂CF₂CN, - CF₂CH₂CN, -CF₂CF₂CH₂CN, -CF₂CH₂CH₂CN, -CF₂CF₂CH₂CH₂CN.

Representative carboxylic acid end groups include -CF₂COOH, - CF₂CF₂COOH, -CF₂CH₂COOH, -CF₂CF₂CH₂COOH, -CF₂CH₂CH₂COOH, - CF₂CF₂CH₂CH₂COOH.

Representative sulfonic acid end groups include -S(O)(O)OR³, - S(O)(O)R⁴, -CF₂O S(O)(O)OR³, -CF₂CF₂O S(O)(O)OR³, -CF₂CH₂O S(O)(O)OR³, -CF₂CF₂CH₂O S(O)(O)OR³, -CF₂CH₂CH₂O S(O)(O)OR³, - CF₂CF₂CH₂CH₂O S(O)(O)OR³, -CF₂ S(O)(O)OR³, -CF₂CF₂ S(O)(O)OR³, - CF₂CH₂ S(O)(O)OR³, -CF₂CF₂CH₂ S(O)(O)OR³, -CF₂CH₂CH₂ S(O)(O)OR³, -CF₂CF₂CH₂CH₂ S(O)(O)OR³, -CF₂O S(O)(O)R⁴, -CF₂CF₂O S(O)(O)R⁴, -CF₂CH₂O S(O)(O)R⁴, -CF₂CF₂CH₂O S(O)(O)R⁴, - CF₂CH₂CH₂O S(O)(O)R⁴, -CF₂CF₂CH₂CH₂O S(O)(O)R⁴, wherein R³ is H, CH₃, CH₂CH₃, CH₂CF₃, CF₃, or CF₂CF₃, R⁴ is CH₃, CH₂CH₃, CH₂CF₃, CF₃, or CF₂CF₃.

In one embodiment of this invention, the amount of perfluoropolyether is less than 40% by weight relative to the refrigerant or heat transfer fluid. Preferably, the amount of perfluoropolyether additive is less than about 20-30 wt.% relative to the refrigerant or heat transfer fluid. More preferably, the perfluoropolyether additive is less than about 10 wt.% relative to the refrigerant or heat transfer fluid. More preferably, the perfluoropolyether additive is less than about 1 to about 2 wt.% relative to the refrigerant or heat transfer fluid. More preferably, the perfluoropolyether additive is between about 0.01 wt.% and 1.0 wt.% relative to the refrigerant or heat transfer fluid. Most preferably, the perfluoropolyether additive is between about 0.03 and 0.80 wt.% relative to the refrigerant or heat transfer fluid.

The refrigerants or heat transfer fluids of use in the present invention are selected from the group consisting of saturated fluorocarbons, unsaturated fluorocarbons, chlorofluorocarbons, hydrochlorofluorocarbons, fluoroethers, hydrocarbons, carbon dioxide, dimethyl ether, ammonia and combinations thereof. Preferred refrigerants or heat transfer fluids include saturated and unsaturated fluorocarbons and hydrofluorocarbons.

Representative saturated fluorocarbon refrigerants or heat transfer fluids include tetrafluoromethane (PFC-14), hexafluoroethane (PFC-116), octafluoropropane (PFC-218), decafluorobutane (PFC-31-10), fluoromethane (HFC-41), difluoromethane (HFC-32), trifluoromethane (HFC-23), fluoroethane (HFC-161), 1,1-difluoroethane (HFC-152a), 1,1,1-trifluoroethane (HFC-143a), 1,1,1,2-tetrafluoroethane (HFC-134a), 1,1,2,2-tetrafluoroethane (HFC-134), 1,1,1,2,2-pentafluoroethane (HFC-125), 1,1,1,3,3,3-hexafluoropropane (HFC-236fa), 1,1,1,2,3,3,3-heptafluoropropane (HFC-227ea), 1,1,1,3,3-pentafluoropropane (HFC-245fa), R-404A (a blend of 44 wt. % of HFC-125, 52 wt. % of HFC-143a and 4 wt. % of HFC-134a), R-410A (a blend of 50 wt. % of HFC-32 and 50 wt. % of HFC-125), R-417A (a blend of 46.6 wt. % of HFC-125, 50 wt. % of HFC-134a and 3.4 wt. % of n-butane), R-422A (a blend of 85.1 wt. % of HFC-125, 11.5 wt. % of HFC-134a, and 3.4 wt. % of isobutane), R-407C (a blend of 23 wt. % of HFC-32, 25 wt. % of HFC-125 and 52 wt. % of HFC-134a), R-507A (a blend of 50 % R-125 and 50 % R-143a), and R-508A (a blend of 39 % HFC-23 and 61% PFC-116)

Representative unsaturated fluorocarbon refrigerants or heat transfer fluids include 1,2,3,3,3-pentafluoro-1-propene, 1,1,3,3,3-pentafluoro-1-propene, 1,1,2,3,3-pentafluoro-1-propene, 1,2,3,3-tetrafluoro-1-propene, 2,3,3,3-tetrafluoro-1-propene, 1,3,3,3-tetrafluoro-1-propene, 1,1,2,3-tetrafluoro-1-propene, 1,1,3,3-tetrafluoro-1-propene, 1,2,3,3-tetrafluoro-1-propene, 2,3,3-trifluoro-1-propene, 3,3,3-trifluoro-1-propene, 1,1,2-trifluoro-1-propene, 1,1,3-trifluoro-1-propene, 1,2,3-trifluoro-1-propene, 1,3,3-trifluoro-1-propene, 1,1,1,2,3,4,4,4-octafluoro-2-butene, 1,1,2,3,3,4,4,4-octafluoro-1-butene, 1,1,1,2,4,4,4-heptafluoro-2-butene, 1,2,3,3,4,4,4-heptafluoro-1-butene, 1,1,1,2,3,4,4-heptafluoro-2-butene, 1,3,3,3-tetrafluoro-2-(trifluoromethyl)-2-propene, 1,1,3,3,4,4,4-heptafluoro-1-butene, 1,1,2,3,4,4,4-heptafluoro-1-butene, 1,1,2,3,3,4,4-heptafluoro-1-butene, 2,3,3,4,4,4-hexafluoro-1-butene, 1,1,1,4,4,4-hexafluoro-2-butene, 1,3,3,4,4,4-hexafluoro-1-butene, 1,2,3,4,4,4-hexafluoro-1-butene, 1,2,3,3,4,4-hexafluoro-1-butene 1,1,2,3,4,4-hexafluoro-2-butene, 1,1,1,2,3,4-hexafluoro-2-butene, 1,1,1,2,3,3-hexafluoro-2-butene, 1,1,1,3,4,4-hexafluoro-2-butene, 1,1,2,3,3,4-hexafluoro-1-butene, 1,1,2,3,4,4-hexafluoro-1-butene, 3,3,3-trifluoro-2-(trifluoromethyl)-1-propene, 1,1,1,2,4-pentafluoro-2-butene, 1,1,1,3,4-pentafluoro-2-butene, 3,3,4,4,4-pentafluoro-1-butene, 1,1,1,4,4-pentafluoro-2-butene, 1,1,1,2,3-pentafluoro-2-butene, 2,3,3,4,4-pentafluoro-1-butene, 1,1,2,4,4-pentafluoro-2-butene, 1,1,2,3,3-pentafluoro-1-butene, 1,1,2,3,4-pentafluoro-2-butene, 1,2,3,3,4-pentafluoro-1-butene, 1,1,3,3,3-pentafluoro-2-methyl-1-propene, 2-(difluoromethyl)-3,3,3-trifluoro-1-propene, 3,3,4,4-tetrafluoro-1-butene, 1,1,3,3-tetrafluoro-2-methyl-1-propene, 1,3,3,3-tetrafluoro-2-methyl-1-propene, 2-(difluoromethyl)-3,3-difluoro-1-propene, 1,1,1,2-tetrafluoro-2-butene, 1,1,1,3-tetrafluoro-2-butene, 1,1,1,2,3,4,4,5,5,5-decafluoro-2-pentene, 1,1,2,3,3,4,4,5,5,5-decafluoro-1-pentene, 1,1,1,4,4,4-hexafluoro-2-(trifluoromethyl)-2-butene, 1,1,1,2,4,4,5,5,5-nonafluoro-2-pentene, 1,1,1,3,4,4,5,5,5-nonafluoro-2-pentene, 1,2,3,3,4,4,5,5,5-nonafluoro-1-pentene, 1,1,3,3,4,4,5,5,5-nonafluoro-1-pentene, 1,1,2,3,3,4,4,5,5-nonafluoro-1-pentene, 1,1,2,3,4,4,5,5,5-nonafluoro-2-pentene, 1,1,1,2,3,4,4,5,5-nonafluoro-2-pentene, 1,1,1,2,3,4,5,5,5-nonafluoro-2-pentene, 1,2,3,4,4,4-hexafluoro-3-(trifluoromethyl)-1-butene, 1,1,2,4,4,4-hexafluoro-3-(trifluoromethyl)-1-butene, 1,1,1,4,4,4-hexafluoro-3-(trifluoromethyl)-2-butene, 1,1,3,4,4,4-hexafluoro-3-(trifluoromethyl)-1-butene, 2,3,3,4,4,5,5,5-octafluoro-1-pentene, 1,2,3,3,4,4,5,5-octafluoro-1-pentene, 3,3,4,4,4-pentafluoro-2-(trifluoromethyl)-1-butene, 1,1,4,4,4-pentafluoro-3-(trifluoromethyl)-1-butene, 1,3,4,4,4-pentafluoro-3-(trifluoromethyl)-1-butene, 1,1,4,4,4-pentafluoro-2-(trifluoromethyl)-1-butene, 1,1,1,4,4,5,5,5-octafluoro-2-pentene, 3,4,4,4-tetrafluoro-3-(trifluoromethyl)-1-butene, 3,3,4,4,5,5,5-heptafluoro-1-pentene, 2,3,3,4,4,5,5-heptafluoro-1-pentene, 1,1,3,3,5,5,5-heptafluoro-1-pentene, 1,1,1,2,4,4,4-heptafluoro-3-methyl-2-butene, 2,4,4,4-tetrafluoro-3-(trifluoromethyl)-1-butene, 1,4,4,4-tetrafluoro-3-(trifluoromethyl)-1-butene, 1,4,4,4-tetrafluoro-3-(trifluoromethyl)-2-butene, 2,4,4,4-tetrafluoro-3-(trifluoromethyl)-2-butene, 3-(trifluoromethyl)-4,4,4-trifluoro-2-butene, 3,4,4,5,5,5-hexafluoro-2-pentene, 1,1,1,4,4,4-hexafluoro-2-methyl-2-butene, 3,3,4,5,5,5-hexafluoro-1-pentene, 4,4,4-trifluoro-2-(trifluoromethyl)-1-butene, 1,1,2,3,3,4,4,5,5,6,6,6-dodecafluoro-1-hexene, 1,1,1,2,2,3,4,5,5,6,6,6-dodecafluoro-3-hexene, 1,1,1,4,4,4-hexafluoro-2,3-bis(trifluoromethyl)-2-butene, 1,1,1,4,4,5,5,5-octafluoro-2-trifluoromethyl-2-pentene, 1,1,1,3,4,5,5,5-octafluoro-4-(trifluoromethyl)-2-pentene, 1,1,1,4,5,5,5-heptafluoro-4-(trifluoromethyl)-2-pentene, 1,1,1,4,4,5,5,6,6,6-decafluoro-2-hexene, 1,1,1,2,2,5,5,6,6,6-decafluoro-3-hexene, 3,3,4,4,5,5,6,6,6-nonafluoro-1-hexene, 4,4,4-trifluoro-3,3-bis(trifluoromethyl)-1-butene, 1,1,1,4,4,4-hexafluoro-3-methyl-2-(trifluoromethyl)-2-butene, 2,3,3,5,5,5-hexafluoro-4-(trifluoromethyl)-1-pentene, 1,1,1,2,4,4,5,5,5-nonafluoro-3-methyl-2-pentene, 1,1,1,5,5,5-hexafluoro-4-(trifluoromethyl)-2-pentene, 3,4,4,5,5,6,6,6-octafluoro-2-hexene, 3,3,4,4,5,5,6,6-octafluoro-2-hexene, 1,1,1,4,4-pentafluoro-2-(trifluoromethyl)-2-pentene, 4,4,5,5,5-pentafluoro-2-(trifluoromethyl)-1-pentene, 3,3,4,4,5,5,5-heptafluoro-2-methyl-1-pentene, 1,1,1,2,3,4,4,5,5,6,6,7,7,7-tetradecafluoro-2-heptene, 1,1,1,2,2,3,4,5,5,6,6,7,7,7-tetradecafluoro-2-heptene, 1,1,1,3,4,4,5,5,6,6,7,7,7-tridecafluoro-2-heptene, 1,1,1,2,4,4,5,5,6,6,7,7,7-tridecafluoro-2-heptene, 1,1,1,2,2,4,5,5,6,6,7,7,7-tridecafluoro-3-heptene, 1,1,1,2,2,3,5,5,6,6,7,7,7-tridecafluoro-3-heptene, 4,4,5,5,6,6,6-heptafluoro-2-hexene, 4,4,5,5,6,6,6-heptafluoro-1-hexene, 1,1,1,2,2,3,4-heptafluoro-3-hexene, 4,5,5,5-tetrafluoro-4-(trifluoromethyl)-1-pentene, 1,1,1,2,5,5,5-heptafluoro-4-methyl-2-pentene, 1,1,1,3-tetrafluoro-2-(trifluoromethyl)-2-pentene, 1,2,3,3,4,4-hexafluorocyclobutene, 3,3,4,4-tetrafluorocyclobutene, 3,3,4,4,5,5-hexafluorocyclopentene, 1,2,3,3,4,4,5,5-octafluorocyclopentene, 1,2,3,3,4,4,5,5,6,6-decafluorocyclohexene, 1,1,1,2,3,4,5,5,5-nonafluoro-4-(trifluoromethyl)-2-pentene, pentafluoroethyl trifluorovinyl ether, trifluoromethyl trifluorovinyl ether.

Representative chlorofluorocarbon refrigerants or heat transfer fluids include trichlorofluoromethane (CFC-11), dichlorodifluoromethane (CFC-12), 1,1,1-trichlorotrifluoroethane (CFC-113a), 1,1,2-trichlorotrifluoroethane (CFC-113), and chloropentafluoroethane (CFC-115).

Representative hydrochlorofluorocarbon refrigerants or heat transfer fluids include chlorodifluoromethane (HCFC-22), 2-chloro-1,1,1-trifluoroethane (HCFC-123), 2-chloro-1,1,1,2-tetrafluoroethane (HCFC-124) and 1-chloro-1,1-difluoroethane (HCFC-142b).

Representative fluoroether refrigerants or heat transfer fluids include CF₃OCHF₂, CF₃OCH₃, CF₃OCH₂F, CHF₂OCHF₂, cyclo-(CF₂CF₂CF₂O-), CF₃CF₂OCH₃, CHF₂OCHFCF₃, CHF₂CF₂OCH₃, C₄F₉OCH₃, C₄F₉OC₂H₅, CF₃OCF₃, CF₃OC₂F₅, C₂F₅OC₂F₅ and CF₃OCF(CF₃)CF(CF₃)OCF₃.

Representative hydrocarbon refrigerants or heat transfer fluids include methane, ethane, propane, cyclopropane, propylene, n-butane, cyclobutane, 2-methylpropane, methylcyclopropane, n-pentane, cyclopentane, 2-methylbutane, methylcyclobutane, 2,2-dimethylpropane and dimethylcyclopropane isomers.

The compositions of the present invention may further comprise about 0.01 weight percent to about 5 weight percent of a stabilizer, free radical scavenger or antioxidant. Such other additives include but are not limited to, nitromethane, hindered phenols, hydroxylamines, thiols, phosphites, or lactones. Single additives or combinations may be used.

Optionally, commonly used refrigeration or air-conditioning system additives may be added, as desired, to compositions of the present invention in order to enhance performance and system stability. These additives are known in the field of refrigeration and air-conditioning, and include, but are not limited to, anti wear agents, extreme pressure lubricants, corrosion and oxidation inhibitors, metal surface deactivators, free radical scavengers, and foam control agents. In general, these additives may be present in the inventive compositions in small amounts relative to the overall composition. Typically concentrations of from less than about 0.1 weight percent to as much as about 3 weight percent of each additive are used. These additives are selected on the basis of the individual system requirements. These additives include members of the triaryl phosphate family of EP (extreme pressure) lubricity additives, such as butylated triphenyl phosphates (BTPP), or other alkylated triaryl phosphate esters, e.g. Syn-0-Ad 8478 from Akzo Chemicals, tricresyl phosphates and related compounds. Additionally, the metal dialkyl dithiophosphates (e.g. zinc dialkyl dithiophosphate (or ZDDP), Lubrizol 1375 and other members of this family of chemicals may be used in compositions of the present invention. Other antiwear additives include natural product oils and asymmetrical polyhydroxyl lubrication additives, such as Synergol TMS (International Lubricants). Similarly, stabilizers such as anti oxidants, free radical scavengers, and water scavengers may be employed. Compounds in this category can include, but are not limited to, butylated hydroxy toluene (BHT) and epoxides.

In one embodiment of this invention, the refrigeration or heat transfer fluid composition comprises the oil, perfluoropolyether, and a refrigeration or heat transfer fluid selected from the group consisting of R-407C, R-422A, R-417A, R-404A, R-410A, R-507A, R-508A, R-422A, R-417A, and HFC-134a.

The present invention further relates to a method of using the refrigeration or heat transfer fluid compositions of the present invention for producing refrigeration or heating, wherein the method comprises producing refrigeration by evaporating said composition in the vicinity of a body to be cooled and thereafter condensing said composition; or producing heat by condensing said composition in the vicinity of the body to be heated and thereafter evaporating said composition.

The present invention further relates to a process for transfer of heat from a heat source to a heat sink wherein the refrigeration or heat transfer fluid compositions of the present invention serve as heat transfer fluids. Said process for heat transfer comprises transferring the compositions of the present invention from a heat source to a heat sink.

Heat transfer fluids are utilized to transfer, move or remove heat from one space, location, object or body to a different space, location, object or body by radiation, conduction, or convection. A heat transfer fluid may function as a secondary coolant by providing means of transfer for cooling (or heating) from a remote refrigeration (or heating) system. In some systems, the heat transfer fluid may remain in a constant state throughout the transfer process (i.e., not evaporate or condense). Alternatively, evaporative cooling processes may utilize heat transfer fluids as well.

A heat source may be defined as any space, location, object or body from which it is desirable to transfer, move or remove heat. Examples of heat sources may be spaces (open or enclosed) requiring refrigeration or cooling, such as refrigerator or freezer cases in a supermarket, building spaces requiring air-conditioning, or the passenger compartment of an automobile requiring air-conditioning. A heat sink may be defined as any space, location, object or body capable of absorbing heat. A vapor compression refrigeration system is one example of such a heat sink.

The refrigeration or heat transfer fluid compositions of the present invention may be used in stationary air-conditioning, heat pumps or mobile air-conditioning and refrigeration systems. Stationary air-conditioning and heat pump applications include window, ductless, ducted, packaged terminal, chillers and commercial, including packaged rooftop. Refrigeration applications include domestic or home refrigerators and freezers, ice machines, self-contained coolers and freezers, walk-in coolers and freezers and supermarket systems, and transport refrigeration systems.

In one embodiment of this invention, the refrigeration or heat transfer fluid compositions of the present invention can be used in a heat pump with "internally enhanced heat transfer surfaces", i.e. heat pumps with fine grooves cut in a spiral or cross hatch pattern on the inside surface of the tube.

As demonstrated by the Examples below, the addition of perfluoropolyether into the refrigerant increased the energy efficiency of the refrigerator and heat transfer system.

### EXAMPLES

A split system Carrier heat pump was used to evaluate refrigerant and lubricant performance in air conditioning and heating modes. The system consisted of a condensing unit, Model 38YXA03032, and an evaporator Unit, Model FX4ANF030, and was rated at a nominal cooling capacity of 2 ½ tons of cooling with R-410A. The system was operated inside of a dual chamber psychrometric chamber, with one chamber regulated at outdoor conditions per standard ARI 210/240 Cooling A test conditions, and the other chamber regulated at Cooling A indoor test conditions. This unit was also modified so that the compressor could be changed from the standard R-410A rated compressor to a compressor sized for operation with R-407C. In the tests cited in Table 1 below, runs 1,2, and 3 were made using the R-407C compressor.

The copper tubing in the evaporator and condenser coils of this air conditioning system came from the factory with a feature called "internally enhanced heat transfer surfaces", a feature which is generally known and used throughout the industry. This feature includes fine grooves cut in a spiral or cross hatch pattern on the inside surface of the tube. These grooves cause disruption of the laminar flow layers near the tube surface. The result of this disruption is believed to be improved heat transfer from the evaporating refrigerant within the copper tubes to the tubes themselves and the attached fins that comprise the evaporator unit. Heat transfer to the air flowing through the fins of the evaporator is believed to be thereby improved, with the creation of a more energy efficient air conditioning or heating process. Again, the use of internally enhanced tube surfaces is well known and widely applied within the air conditioning and heat pump industries. Most higher efficiency systems employ enhanced surface tubing in evaporators and condensers.

| Table 1 | | | | | | | |
|---|---|---|---|---|---|---|---|
| Impact of adding PFPE to Carrier Heat Pump | | | | | | | |
| Run # | Refrigerant | Lubricant | Additive | EER | EER Delta vs. POE | Capacity kBTU/h | Capacity Delta vs. POE |
| 1 | R-407C | RL32H | none | 11.2 | | 27.8 | |
| 2 | R-407C | 3GS | none | 10.8 | 96.7 | 26.6 | 95.5 |
| 3 | R-407C | RL32H | 1% 157 FSL | 11.3 | 101.0 | 27.6 | 99.2 |

Note that in this table the lubricant "RL32H" is a commercial POE lubricant used in Carrier air conditioning systems. This POE lubricant is miscible with the refrigerant used in the example. The lubricant 3GS is a commercial naphthenic mineral oil available from Sonneborn, Inc. The mineral oil lubricant is not miscible with HFC refrigerants. 1 kBTU/h is equal to 0.29 kW.

In Table 1, note that with HFC refrigerant R-407C, when mineral oil is used the efficiency and capacity are reduced by about 3.3% and 4.5%, respectively versus POE. (Runs 1 and2).

Further note that when Krytox 157 FSL was added to the R-407C and POE system (Run 3) the EER (energy efficiency ratio) was improved to be 1 % better than that obtained in Run 1 with no PFPE, and the capacity was within 1% of Run 1, the POE baseline case.

## Claims

1. A composition comprising:
1) a synthetic oil selected from the group consisting of polyol esters, polyvinyl ethers and combinations thereof, and
2) perfluoropolyether.

2. The composition of claim 1 wherein said amount of perfluoropolyether is less than 50% by weight relative to said oil.

3. The composition of claim 1 wherein said amount of perfluoropolyether is less than 20% by weight relative to said oil.

4. The composition of claim 1 wherein said amount of perfluoropolyether is less than 5% by weight relative to said oil.

5. The composition of claim 1 further comprising a refrigerant or heat transfer fluid selected from the group consisting of saturated fluorocarbons, unsaturated fluorocarbons, chlorofluorocarbons, hydrochlorofluorocarbons, fluoroethers, hydrocarbons, carbon dioxide, dimethyl ether, ammonia and combinations thereof.

6. The composition of claim 5 wherein said refrigerant or heat transfer fluid is selected from the group consisting of R-407C, R-422A, R-417A, R-404A, R-410A, R-507A, R-508A, and HFC-134a.

7. The composition of claim 5 wherein said amount of perfluoropolyether is less than 40% by weight relative to said refrigerant or heat transfer fluid.

8. The composition of claim 5 wherein said amount of perfluoropolyether is less than 10% by weight relative to said refrigerant or heat transfer fluid.

9. The composition of claim 5 wherein said amount of perfluoropolyether is less than 1% by weight relative to said refrigerant or heat transfer fluid.

10. The composition of claim 1 or 5 wherein at least one of the end groups of said perfluoropolyether is a functionalized group selected from the group consisting of esters, hydroxyls, amines, amides, cyanos, carboxylic acids and sulfonic acids.

11. The composition of claim 1 or 5 wherein at least one of the end groups of said perfluoropolyether is carboxylic acid.

12. The composition of claim 1 or 5 wherein at least one of the end groups of said perfluoropolyether is sulfonic acid.

13. The composition of claim 5 wherein said refrigerant or heat transfer fluid is an unsaturated fluorocarbon.

14. The composition of claim 5 wherein said refrigerant or heat transfer fluid is selected from the group consisting of 1,2,3,3,3-pentafluoro-1-propene, 1,1,3,3,3-pentafluoro-1-propene, 1,1,2,3,3-pentafluoro-1-propene, 1,2,3,3-tetrafluoro-1-propene, 2,3,3,3-tetrafluoro-1-propene, 1,3,3,3-tetrafluoro-1-propene, 1,1,2,3-tetrafluoro-1-propene, 1,1,3,3-tetrafluoro-1-propene, 1,2,3,3-tetrafluoro-1-propene, 2,3,3-trifluoro-1-propene, 3,3,3-trifluoro-1-propene, 1,1,2-trifluoro-1-propene, 1,1,3-trifluoro-1-propene, 1,2,3-trifluoro-1-propene, 1,3,3-trifluoro-1-propene, 1,1,1,2,3,4,4,4-octafluoro-2-butene, 1,1,2,3,3,4,4,4-octafluoro-1-butene, 1,1,1,2,4,4,4-heptafluoro-2-butene, 1,2,3,3,4,4,4-heptafluoro-1-butene, 1,1,1,2,3,4,4-heptafluoro-2-butene, 1,3,3,3-tetrafluoro-2-(trifluoromethyl)-2-propene, 1,1,3,3,4,4,4-heptafluoro-1-butene, 1,1,2,3,4,4,4-heptafluoro-1-butene, 1,1,2,3,3,4,4-heptafluoro-1-butene, 2,3,3,4,4,4-hexafluoro-1-butene, 1,1,1,4,4,4-hexafluoro-2-butene, 1,3,3,4,4,4-hexafluoro-1-butene, 1,2,3,4,4,4-hexafluoro-1-butene, 1,2,3,3,4,4-hexafluoro-1-butene 1,1,2,3,4,4-hexafluoro-2-butene, 1,1,1,2,3,4-hexafluoro-2-butene, 1,1,1,2,3,3-hexafluoro-2-butene, 1,1,1,3,4,4-hexafluoro-2-butene, 1,1,2,3,3,4-hexafluoro-1-butene, 1,1,2,3,4,4-hexafluoro-1-butene, 3,3,3-trifluoro-2-(trifluoromethyl)-1-propene, 1,1,1,2,4-pentafluoro-2-butene, 1,1,1,3,4-pentafluoro-2-butene, 3,3,4,4,4-pentafluoro-1-butene, 1,1,1,4,4-pentafluoro-2-butene, 1,1,1,2,3-pentafluoro-2-butene, 2,3,3,4,4-pentafluoro-1-butene, 1,1,2,4,4-pentafluoro-2-butene, 1,1,2,3,3-pentafluoro-1-butene, 1,1,2,3,4-pentafluoro-2-butene, 1,2,3,3,4-pentafluoro-1-butene, 1,1,3,3,3-pentafluoro-2-methyl-1-propene, 2-(difluoromethyl)-3,3,3-trifluoro-1-propene, 3,3,4,4-tetrafluoro-1-butene, 1,1,3,3-tetrafluoro-2-methyl-1-propene, 1,3,3,3-tetrafluoro-2-methyl-1-propene, 2-(difluoromethyl)-3,3-difluoro-1-propene, 1,1,1,2-tetrafluoro-2-butene, 1,1,1,3-tetrafluoro-2-butene, 1,1,1,2,3,4,4,5,5,5-decafluoro-2-pentene, 1,1,2,3,3,4,4,5,5,5-decafluoro-1-pentene, 1,1,1,4,4,4-hexafluoro-2-(trifluoromethyl)-2-butene, 1,1,1,2,4,4,5,5,5-nonafluoro-2-pentene, 1,1,1,3,4,4,5,5,5-nonafluoro-2-pentene, 1,2,3,3,4,4,5,5,5-nonafluoro-1-pentene, 1,1,3,3,4,4,5,5,5-nonafluoro-1-pentene, 1,1,2,3,3,4,4,5,5-nonafluoro-1-pentene, 1,1,2,3,4,4,5,5,5-nonafluoro-2-pentene, 1,1,1,2,3,4,4,5,5-nonafluoro-2-pentene, 1,1,1,2,3,4,5,5,5-nonafluoro-2-pentene, 1,2,3,4,4,4-hexafluoro-3-(trifluoromethyl)-1-butene, 1,1,2,4,4,4-hexafluoro-3-(trifluoromethyl)-1-butene, 1,1,1,4,4,4-hexafluoro-3-(trifluoromethyl)-2-butene, 1,1,3,4,4,4-hexafluoro-3-(trifluoromethyl)-1-butene, 2,3,3,4,4,5,5,5-octafluoro-1-pentene, 1,2,3,3,4,4,5,5-octafluoro-1-pentene, 3,3,4,4,4-pentafluoro-2-(trifluoromethyl)-1-butene, 1,1,4,4,4-pentafluoro-3-(trifluoromethyl)-1-butene, 1,3,4,4,4-pentafluoro-3-(trifluoromethyl)-1-butene, 1,1,4,4,4-pentafluoro-2-(trifluoromethyl)-1-butene, 1,1,1,4,4,5,5,5-octafluoro-2-pentene, 3,4,4,4-tetrafluoro-3-(trifluoromethyl)-1-butene, 3,3,4,4,5,5,5-heptafluoro-1-pentene, 2,3,3,4,4,5,5-heptafluoro-1-pentene, 1,1,3,3,5,5,5-heptafluoro-1-pentene, 1,1,1,2,4,4,4-heptafluoro-3-methyl-2-butene, 2,4,4,4-tetrafluoro-3-(trifluoromethyl)-1-butene, 1,4,4,4-tetrafluoro-3-(trifluoromethyl)-1-butene, 1,4,4,4-tetrafluoro-3-(trifluoromethyl)-2-butene, 2,4,4,4-tetrafluoro-3-(trifluoromethyl)-2-butene, 3-(trifluoromethyl)-4,4,4-trifluoro-2-butene, 3,4,4,5,5,5-hexafluoro-2-pentene, 1,1,1,4,4,4-hexafluoro-2-methyl-2-butene, 3,3,4,5,5,5-hexafluoro-1-pentene, 4,4,4-trifluoro-2-(trifluoromethyl)-1-butene, 1,1,2,3,3,4,4,5,5,6,6,6-dodecafluoro-1-hexene, 1,1,1,2,2,3,4,5,5,6,6,6-dodecafluoro-3-hexene, 1,1,1,4,4,4-hexafluoro-2,3-bis(trifluoromethyl)-2-butene, 1,1,1,4,4,5,5,5-octafluoro-2-trifluoromethyl-2-pentene, 1,1,1,3,4,5,5,5-octafluoro-4-(trifluoromethyl)-2-pentene, 1,1,1,4,5,5,5-heptafluoro-4-(trifluoromethyl)-2-pentene, 1,1,1,4,4,5,5,6,6,6-decafluoro-2-hexene, 1,1,1,2,2,5,5,6,6,6-decafluoro-3-hexene, 3,3,4,4,5,5,6,6,6-nonafluoro-1-hexene, 4,4,4-trifluoro-3,3-bis(trifluoromethyl)-1-butene, 1,1,1,4,4,4-hexafluoro-3-methyl-2-(trifluoromethyl)-2-butene, 2,3,3,5,5,5-hexafluoro-4-(trifluoromethyl)-1-pentene, 1,1,1,2,4,4,5,5,5-nonafluoro-3-methyl-2-pentene, 1,1,1,5,5,5-hexafluoro-4-(trifluoromethyl)-2-pentene, 3,4,4,5,5,6,6,6-octafluoro-2-hexene, 3,3,4,4,5,5,6,6-octafluoro-2-hexene, 1,1,1,4,4-pentafluoro-2-(trifluoromethyl)-2-pentene, 4,4,5,5,5-pentafluoro-2-(trifluoromethyl)-1-pentene, 3,3,4,4,5,5,5-heptafluoro-2-methyl-1-pentene, 1,1,1,2,3,4,4,5,5,6,6,7,7,7-tetradecafluoro-2-heptene, 1,1,1,2,2,3,4,5,5,6,6,7,7,7-tetradecafluoro-2-heptene, 1,1,1,3,4,4,5,5,6,6,7,7,7-tridecafluoro-2-heptene, 1,1,1,2,4,4,5,5,6,6,7,7,7-tridecafluoro-2-heptene, 1,1,1,2,2,4,5,5,6,6,7,7,7-tridecafluoro-3-heptene, 1,1,1,2,2,3,5,5,6,6,7,7,7-tridecafluoro-3-heptene, 4,4,5,5,6,6,6-heptafluoro-2-hexene, 4,4,5,5,6,6,6-heptafluoro-1-hexene, 1,1,1,2,2,3,4-heptafluoro-3-hexene, 4,5,5,5-tetrafluoro-4-(trifluoromethyl)-1-pentene, 1,1,1,2,5,5,5-heptafluoro-4-methyl-2-pentene, 1,1,1,3-tetrafluoro-2-(trifluoromethyl)-2-pentene, 1,2,3,3,4,4-hexafluorocyclobutene, 3,3,4,4-tetrafluorocyclobutene, 3,3,4,4,5,5-hexafluorocyclopentene, 1,2,3,3,4,4,5,5-octafluorocyclopentene, 1,2,3,3,4,4,5,5,6,6-decafluorocyclohexene, 1,1,1,2,3,4,5,5,5-nonafluoro-4-(trifluoromethyl)-2-pentene, pentafluoroethyl trifluorovinyl ether, trifluoromethyl trifluorovinyl ether.

15. The composition of claim 5 wherein said refrigerant or heat transfer fluid is selected from the group consisting of 1,2,3,3,3-pentafluoro-1-propene, 1,1,3,3,3-pentafluoro-1-propene, 1,1,2,3,3-pentafluoro-1-propene, 1,2,3,3-tetrafluoro-1-propene, 2,3,3,3-tetrafluoro-1-propene, 1,3,3,3-tetrafluoro-1-propene, 1,1,2,3-tetrafluoro-1-propene, 1,1,3,3-tetrafluoro-1-propene, 1,2,3,3-tetrafluoro-1-propene, 1,1,1,2,3,4,4,4-octafluoro-2-butene, 1,1,1,2,4,4,4-heptafluoro-2-butene and 1,1,1,4,4,4-hexafluoro-2-butene.

16. A method of producing refrigeration, said method comprising: evaporating the refrigerant or heat transfer fluid composition of claim 5 in the vicinity of a body to be cooled and thereafter condensing said composition.

17. A method of producing heat, said method comprising: condensing the refrigerant or heat transfer fluid composition of claim 5 in the vicinity of the body to be heated and thereafter evaporation said composition.

18. A process for transferring heat, said process comprising transferring the composition of claim 5 from a heat source to a heat sink.

19. A refrigeration apparatus using the composition of claim 5.

20. An air-conditioning apparatus using the composition of claim 5.

## Patentansprüche

1. Zusammensetzung umfassend:
1) ein synthetisches Öl ausgewählt aus der Gruppe bestehend aus Polyolestern, Polyvinylethern und Kombinationen davon, und
2) einen Perfluorpolyether.

2. Zusammensetzung nach Anspruch 1, wobei die Menge an Perfluorpolyether weniger als 50 Gew.-%, auf das Öl bezogen, beträgt.

3. Zusammensetzung nach Anspruch 1, wobei die Menge an Perfluorpolyether weniger als 20 Gew.-%, auf das Öl bezogen, beträgt.

4. Zusammensetzung nach Anspruch 1, wobei die Menge an Perfluorpolyether weniger als 5 Gew.-%, auf das Öl bezogen, beträgt.

5. Zusammensetzung nach Anspruch 1, ferner umfassend ein Kühlmittel oder Wärmeübertragungsfluid ausgewählt aus der Gruppe bestehend aus gesättigten Fluorkohlenstoffen, ungesättigten Fluorkohlenstoffen, Chlorfluorkohlenstoffen, Fluorchlorkohlenwasserstoffen, Fluorethern, Kohlenwasserstoffen, Kohlendioxid, Dimethylether, Ammoniak und Kombinationen davon.

6. Zusammensetzung nach Anspruch 5, wobei das Kühlmittel oder Wärmeübertragungsfluid aus der Gruppe ausgewählt ist, bestehend aus R-407C, R-422A, R-417A, R-404A, R410A, R-507A, R-508A und HFC-134a.

7. Zusammensetzung nach Anspruch 5, wobei die Menge an Perfluorpolyether weniger als 40 Gew.-%, auf das Kühlmittel oder Wärmeübertragungsfluid bezogen, beträgt.

8. Zusammensetzung nach Anspruch 5, wobei die Menge an Perfluorpolyether weniger als 10 Gew.-%, auf das Kühlmittel oder Wärmeübertragungsfluid bezogen, beträgt.

9. Zusammensetzung nach Anspruch 5, wobei die Menge an Perfluorpolyether weniger als 1 Gew.-%, auf das Kühlmittel oder Wärmeübertragungsfluid bezogen, beträgt.

10. Zusammensetzung nach Anspruch 1 oder 5, wobei mindestens eine der Endgruppen des Perfluorpolyethers eine funktionalisierte Gruppe ist ausgewählt aus der Gruppe bestehend aus Estern, Hydroxylen, Aminen, Amiden, Cyanos, Carbonsäuren und Sulfonsäuren.

11. Zusammensetzung nach Anspruch 1 oder 5, wobei mindestens eine der Endgruppen des Perfluorpolyethers Carbonsäure ist.

12. Zusammensetzung nach Anspruch 1 oder 5, wobei mindestens eine der Endgruppen des Perfluorpolyethers Sulfonsäure ist.

13. Zusammensetzung nach Anspruch 5, wobei das Kühlmittel oder Wärmeübertragungsfluid ein ungesättigter Fluorkohlenstoff ist.

14. Zusammensetzung nach Anspruch 5, wobei das Kühlmittel oder Wärmeübertragungsfluid aus der Gruppe ausgewählt ist bestehend aus 1,2,3,3,3-Pentafluor-1-propen, 1,1,3,3,3-Pentafluor-1-propen, 1,1,2,3,3-Pentafluor-1-propen, 1,2,3,3-Tetrafluor-1-propen, 2,3,3,3-Tetrafluor-1-propen, 1,3,3,3-Tetrafluor-1-propen, 1,1,2,3-Tetrafluor-1-propen, 1,1,3,3-Tetrafluor-1-propen, 1,2,3,3-Tetrafluor-1-propen, 2,3,3-trifluor-1-propen, 3,3,3-Trifluor-1-propen, 1,1,2-Trifluor-1-propen, 1,1,3-Trifluor-1-propen, 1,2,3-Trifluor-1-propen, 1,3,3-Trifluor-1-propen, 1,1,1,2,3,4,4,4-Octafluor-2-buten, 1,1,2,3,3,4,4,4-Octafluor-1-buten, 1,1,1,2,4,4,4-Heptafluor-2-buten, 1,2,3,3,4,4,4-Heptafluor-1-buten, 1,1,1,2,3,4,4-Heptafluor-2-buten, 1,3,3,3-Tetrafluor-2-(trifluormethyl)-2-propen, 1,1,3,3,4,4,4-Heptafluor-1-buten, 1,1,2,3,4,4,4-Heptafluor-1-buten, 1,1,2,3,3,4,4-Heptafluor-1-buten, 2,3,3,4,4,4-Hexafluor-1-buten, 1,1,1,4,4,4-Hexafluor-2-buten, 1,3,3,4,4,4-Hexafluor-1-buten, 1,2,3,4,4,4-Hexafluor-1-buten, 1,2,3,3,4,4-Hexafluor-1-buten, 1,1,2,3,4,4-Hexafluor-2-buten, 1,1,1,2,3,4-Hexafluor-2-buten, 1,1,1,2,3,3-Hexafluor-2-buten, 1,1,1,3,4,4-Hexafluor-2-buten, 1,1,2,3,3,4-Hexafluor-1-buten, 1,1,2,3,4,4-Hexafluor-1-buten, 3,3,3-Trifluor-2-(trifluormethyl)-1-propen, 1,1,1,2,4-Pentafluor-2-buten, 1,1,1,3,4-Pentafluor-2-buten, 3,3,4,4,4-Pentafluor-1-buten, 1,1,1,4,4-Pentafluor-2-buten, 1,1,1,2,3-Pentafluor-2-buten, 2,3,3,4,4-Pentafluor-1-buten, 1,1,2,4,4-Pentafluor-2-buten, 1,1,2,3,3-Pentafluor-1-buten, 1,1,2,3,4-Pentafluor-2-buten, 1,2,3,3,4-Pentafluor-1-buten, 1,1,3,3,3-Pentafluor-2-methyl-1-propen, 2-(Difluormethyl)-3,3,3-trifluor-1-propen, 3,3,4,4-Tetrafluor-1-buten, 1,1,3,3-Tetrafluor-2-methyl-1-propen, 1,3,3,3-Tetrafluor-2-methyl-1-propen, 2-(Difluormethyl)-3,3-difluor-1-propen, 1,1,1,2-Tetrafluor-2-buten, 1,1,1,3-Tetrafluor-2-buten, 1,1,1,2,3,4,4,5,5,5-Decafluor-2-penten, 1,1,2,3,3,4,4,5,5,5-Decafluor-1-penten, 1,1,1,4,4,4-Hexafluor-2-(trifluormethyl)-2-buten, 1,1,1,2,4,4,5,5,5-Nonafluor-2-penten, 1,1,1,3,4,4,5,5,5-Nonafluor-2-penten, 1,2,3,3,4,4,5,5,5-Nonafluor-1-penten, 1,1,3,3,4,4,5,5,5-Nonafluor-1-penten, 1,1,2,3,3,4,4,5,5-Nonafluor-1-penten, 1,1,2,3,4,4,5,5,5-Nonafluor-2-penten, 1,1,1,2,3,4,4,5,5-Nonafluor-2-penten, 1,1,1,2,3,4,5,5,5-Nonafluor-2-penten, 1,2,3,4,4,4-Hexafluor-3-(trifluormethyl)-1-buten, 1,1,2,4,4,4-Hexafluor-3-(trifluormethyl)-1-buten, 1,1,1,4,4,4-Hexafluor-3-(trifluormethyl)-2-buten, 1,1,3,4,4,4-Hexafluor-3-(trifluormethyl)-1-buten, 2,3,3,4,4,5,5,5-Octafluor-1-penten, 1,2,3,3,4,4,5,5-Octafluor-1-penten, 3,3,4,4,4-Pentafluor-2-(trifluormethyl)-1-buten, 1,1,4,4,4-Pentafluor-3-(trifluormethyl)-1-buten, 1,3,4,4,4-Pentafluor-3-(trifluormethyl)-1-buten, 1,1,4,4,4-Pentafluor-2-(trifluormethyl)-1-buten, 1,1,1,4,4,5,5,5-Octafluor-2-penten, 3,4,4,4-Tetrafluor-3-(trifluormethyl)-1-buten, 3,3,4,4,5,5,5-Heptafluor-1-penten, 2,3,3,4,4,5,5-Heptafluor-1-penten, 1,1,3,3,5,5,5-Heptafluor-1-penten, 1,1,1,2,4,4,4-Heptafluor-3-methyl-2-buten, 2,4,4,4-Tetrafluor-3-(trifluormethyl)-1-buten, 1,4,4,4-Tetrafluor-3-(trifluormethyl)-1-buten, 1,4,4,4-Tetrafluor-3-(trifluormethyl)-2-buten, 2,4,4,4-Tetrafluor-3-(trifluormethyl)-2-buten, 3-(Trifluormethyl)-4,4,4-trifluor-2-buten, 3,4,4,5,5,5-Hexafluor-2-penten, 1,1,1,4,4,4-Hexafluor-2-methyl-2-buten, 3,3,4,5,5,5-Hexafluor-1-penten, 4,4,4-Trifluor-2-(trifluormethyl)-1-buten, 1,1,2,3,3,4,4,5,5,6,6,6-Dodecafluor-1-hexen, 1,1,1,2,2,3,4,5,5,6,6,6-Dodecafluor-3-hexen, 1,1,1,4,4,4-Hexafluor-2,3-bis(trifluormethyl)-2-buten, 1,1,1,4,4,5,5,5-Octafluor-2-trifluormethyl-2-penten, 1,1,1,3,4,5,5,5-Octafluor-4-(trifluormethyl)-2-penten, 1,1,1,4,5,5,5-Heptafluor-4-(trifluormethyl)-2-penten, 1,1,1,4,4,5,5,6,6,6-Decafluor-2-hexen, 1,1,1,2,2,5,5,6,6,6-Decafluor-3-hexen, 3,3,4,4,5,5,6,6,6-Nonafluor-1-hexen, 4,4,4-Trifluor-3,3-bis(trifluormethyl)-1-buten, 1,1,1,4,4,4-Hexafluor-3-methyl-2-(trifluormethyl)-2-buten, 2,3,3,5,5,5-Hexafluor-4-(trifluormethyl)-1-penten, 1,1,1,2,4,4,5,5,5-Nonafluor-3-methyl-2-penten, 1,1,1,5,5,5-Hexafluor-4-(trifluormethyl)-2-penten, 3,4,4,5,5,6,6,6-Octafluor-2-hexen, 3,3,4,4,5,5,6,6-Octafluor-2-hexen, 1,1,1,4,4-Pentafluor-2-(trifluormethyl)-2-penten, 4,4,5,5,5-Pentafluor-2-(trifluormethyl)-1-penten, 3,3,4,4,5,5,5-Heptafluor-2-methyl-1-penten, 1,1,1,2,3,4,4,5,5,6,6,7,7,7-Tetradecafluor-2-hepten, 1,1,1,2,2,3,4,5,5,6,6,7,7,7-Tetradecafluor-2-hepten, 1,1,1,3,4,4,5,5,6,6,7,7,7-Tridecafluor-2-hepten, 1,1,1,2,4,4,5,5,6,6,7,7,7-Tridecafluor-2-hepten, 1,1,1,2,2,4,5,5,6,6,7,7,7-Tridecafluor-3-hepten, 1,1,1,2,2,3,5,5,6,6,7,7,7-Tridecafluor-3-hepten, 4,4,5,5,6,6,6-Heptafluor-2-hexen, 4,4,5,5,6,6,6-Heptafluor-1-hexen, 1,1,1,2,2,3,4-Heptafluor-3-hexen, 4,5,5,5-Tetrafluor-4-(trifluormethyl)-1-penten, 1,1,1,2,5,5,5-Heptafluor-4-methyl-2-penten, 1,1,1,3-Tetrafluor-2-(trifluormethyl)-2-penten, 1,2,3,3,4,4-Hexafluorcyclobuten, 3,3,4,4-Tetrafluorcyclobuten, 3,3,4,4,5,5-Hexafluorcyclopenten, 1,2,3,3,4,4,5,5-Octafluorcyclopenten, 1,2,3,3,4,4,5,5,6,6-Decafluorcyclohexen, 1,1,1,2,3,4,5,5,5-Nonafluor-4-(trifluormethyl)-2-penten, Pentafluorethyltrifluorvinylether, Trifluormethyltrifluorvinylether.

15. Zusammensetzung nach Anspruch 5, wobei das Kühlmittel oder Wärmeübertragungsfluid aus der Gruppe ausgewählt ist bestehend aus 1,2,3,3,3-Pentafluor-1-propen, 1,1,3,3,3-Pentafluor-1-propen, 1,1,2,3,3-Pentafluor-1-propen, 1,2,3,3-Tetrafluor-1-propen, 2,3,3,3-Tetrafluor-1-propen, 1,3,3,3-Tetrafluor-1-propen, 1,1,2,3-Tetrafluor-1-propen, 1,1,3,3-Tetrafluor-1-propen, 1,2,3,3-Tetrafluor-1-propen, 1,1,1,2,3,4,4,4-Octafluor-2-buten, 1,1,1,2,4,4,4-Heptafluor-2-buten und 1,1,1,4,4,4-Hexafluor-2-buten.

16. Verfahren für das Erzeugen von Kühlung, wobei das Verfahren das Verdampfen der Kühlmittel- oder Wärmeübertragungsfluidzusammensetzung nach Anspruch 5 in der Nähe eines zu kühlenden Körpers und daraufhin das Kondensieren der Zusammensetzung umfasst.

17. Verfahren für das Erzeugen von Wärme, wobei das Verfahren das Kondensieren der Kühlmittel- oder Wärmeübertragungsfluidzusammensetzung nach Anspruch 5 in der Nähe des zu wärmenden Körpers und daraufhin das Verdampfen der Zusammensetzung umfasst.

18. Verfahren zum Übertragen von Wärme, wobei das Verfahren das Übertragen der Zusammensetzungen nach Anspruch 5 von einer Wärmequelle zu einem Kühlkörper umfasst.

19. Kühlapparat, welcher die Zusammensetzung nach Anspruch 5 verwendet.

20. Klimatisierungsvorrichtung, welche die Zusammensetzung nach Anspruch 5 verwendet.

## Revendications

1. Composition comprenant :
1) une huile synthétique sélectionnée dans le groupe constitué des esters de polyol, des poly(éthers de vinyle) et de combinaisons de ceux-ci, et
2) un perfluoropolyéther.

2. Composition selon la revendication 1, dans laquelle ladite quantité de perfluoropolyéther est inférieure à 50 % en poids par rapport à ladite huile.

3. Composition selon la revendication 1, dans laquelle ladite quantité de perfluoropolyéther est inférieure à 20 % en poids par rapport à ladite huile.

4. Composition selon la revendication 1, dans laquelle ladite quantité de perfluoropolyéther est inférieure à 5 % en poids par rapport à ladite huile.

5. Composition selon la revendication 1 comprenant en outre un agent réfrigérant ou fluide de transfert thermique sélectionné dans le groupe constitué des fluorocarbones saturés, des fluorocarbones insaturés, des chlorofluorocarbures, des hydrocarbures chlorés et fluorés, des éthers fluorés, des hydrocarbures, du dioxyde de carbone, de l'éther de diméthyle, de l'ammoniac et des combinaisons de ceux-ci.

6. Composition selon la revendication 5, dans laquelle ledit agent réfrigérant ou fluide de transfert thermique est sélectionné dans le groupe constitué de R-407C, R-422A, R-417A, R-404A, R410A, R-507A, R-508A et HFC-134a.

7. Composition selon la revendication 5, dans laquelle ladite quantité de perfluoropolyéther est inférieure à 40 % en poids par rapport audit agent réfrigérant ou fluide de transfert thermique.

8. Composition selon la revendication 5, dans laquelle ladite quantité de perfluoropolyéther est inférieure à 10 % en poids par rapport audit agent réfrigérant ou fluide de transfert thermique.

9. Composition selon la revendication 5, dans laquelle ladite quantité de perfluoropolyéther est inférieure à 1 % en poids par rapport audit agent réfrigérant ou fluide de transfert thermique.

10. Composition selon la revendication 1 ou 5, dans laquelle au moins un des groupes terminaux dudit perfluoropolyéther est un groupe fonctionnalisé sélectionné dans le groupe constitué des esters, des hydroxyles, des amines, des amides, des groupes cyano, des acides carboxyliques et des acides sulfoniques.

11. Composition selon la revendication 1 ou 5, dans laquelle au moins un des groupes terminaux dudit perfluoropolyéther est un acide carboxylique.

12. Composition selon la revendication 1 ou 5, dans laquelle au moins un des groupes terminaux dudit perfluoropolyéther est un acide sulfonique.

13. Composition selon la revendication 5, dans laquelle ledit agent réfrigérant ou fluide de transfert thermique est un fluorocarbone insaturé.

14. Composition selon la revendication 5 dans laquelle ledit agent réfrigérant ou fluide de transfert thermique est sélectionné dans le groupe constitué du 1,2,3,3,3-pentafluoro-1-propène, 1,1,3,3,3-pentafluoro-1-propène, 1,1,2,3,3-pentafluoro-1-propène, 1,2,3,3-tétrafluoro-1-propène, 2,3,3,3-tétrafluoro-1-propène, 1,3,3,3-tétrafluoro-1-propène, 1,1,2,3-tétrafluoro-1-propène, 1,1,3,3-tétrafluoro-1-propène, 1,2,3,3-tétrafluoro-1-propène, 2,3,3-trifluoro-1-propène, 3,3,3-trifluoro-1-propène, 1,1,2-trifluoro-1-propène, 1,1,3-trifluoro-1-propène, 1,2,3-trifluoro-1-propène, 1,3,3-trifluoro-1-propène, 1,1,1,2,3,4,4,4-octafluoro-2-butène, 1,1,2,3,3,4,4,4-octafluoro-1-butène, 1,1,1,2,4,4,4-heptafluoro-2-butène, 1,2,3,3,4,4,4-heptafluoro-1-butène, 1,1,1,2,3,4,4-heptafluoro-2-butène, 1,3,3,3-tétrafluoro-2-(trifluorométhyl)-2-propène, 1,1,3,3,4,4,4-heptafluoro-1-butène, 1,1,2,3,4,4,4-heptafluoro-1-butène, 1,1,2,3,3,4,4-heptafluoro-1-butène, 2,3,3,4,4,4-hexafluoro-1-butène, 1,1,1,4,4,4-hexafluoro-2-butène, 1,3,3,4,4,4-hexafluoro-1-butène, 1,2,3,4,4,4-hexafluoro-1-butène, 1,2,3,3,4,4-hexafluoro-1-butène, 1,1,2,3,4,4-hexafluoro-2-butène, 1,1,1,2,3,4-hexafluoro-2-butène, 1,1,1,2,3,3-hexafluoro-2-butène, 1,1,1,3,4,4-hexafluoro-2-butène, 1,1,2,3,3,4-hexafluoro-1-butène, 1,1,2,3,4,4-hexafluoro-1-butène, 3,3,3-trifluoro-2-(trifluorométhyl)-1-propène, 1,1,1,2,4-pentafluoro-2-butène, 1,1,1,3,4-pentafluoro-2-butène, 3,3,4,4,4-pentafluoro-1-butène, 1,1,1,4,4-pentafluoro-2-butène, 1,1,1,2,3-pentafluoro-2-butène, 2,3,3,4,4-pentafluoro-1-butène, 1,1,2,4,4-pentafluoro-2-butène, 1,1,2,3,3-pentafluoro-1-butène, 1,1,2,3,4-pentafluoro-2-butène, 1,2,3,3,4-pentafluoro-1-butène, 1,1,3,3,3-pentafluoro-2-méthyl-1-propène, 2-(difluorométhyl)-3,3,3-trifluoro-1-propène, 3,3,4,4-tétrafluoro-1-butène, 1,1,3,3-tétrafluoro-2-méthyl-1-propène, 1,3,3,3 -tétrafluoro-2-méthyl-1-propène, 2-(difluorométhyl)-3,3-difluoro-1-propène, 1,1,1,2-tétrafluoro-2-butène, 1,1,1,3-tétrafluoro-2-butène, 1,1,1,2,3,4,4,5,5,5-décafluoro-2-pentène, 1,1,2,3,3,4,4,5,5,5-décafluoro-1-pentène, 1,1,1,4,4,4-hexafluoro-2-(trifluorométhyl)-2-butène, 1,1,1,2,4,4,5,5,5-nonafluoro-2-pentène, 1,1,1,3,4,4,5,5,5-nonafluoro-2-pentène, 1,2,3,3,4,4,5,5,5-nonafluoro-1-pentène, 1,1,3,3,4,4,5,5,5-nonafluoro-1-pentène, 1,1,2,3,3,4,4,5,5-nonafluoro-1-pentène, 1,1,2,3,4,4,5,5,5-nonafluoro-2-pentène, 1,1,1,2,3,4,4,5,5-nonafluoro-2-pentène, 1,1,1,2,3,4,5,5,5-nonafluoro-2-pentène, 1,2,3,4,4,4-hexafluoro-3-(trifluorométhyl)-1-butène, 1,1,2,4,4,4-hexafluoro-3-(trifluorométhyl)-1-butène, 1,1,1,4,4,4-hexafluoro-3-(trifluorométhyl)-2-butène, 1,1,3,4,4,4-hexafluoro-3-(trifluorométhyl)-1-butène, 2,3,3,4,4,5,5,5-octafluoro-1-pentène, 1,2,3,3,4,4,5,5-octafluoro-1-pentène, 3,3,4,4,4-pentafluoro-2-(trifluorométhyl)-1-butène, 1,1,4,4,4-pentafluoro-3-(trifluorométhyl)-1-butène, 1,3,4,4,4-pentafluoro-3-(trifluorométhyl)-1-butène, 1,1,4,4,4-pentafluoro-2-(trifluorométhyl)-1-butène, 1,1,1,4,4,5,5,5-octafluoro-2-pentène, 3,4,4,4-tétrafluoro-3-(trifluorométhyl)-1-butène, 3,3,4,4,5,5,5-heptafluoro-1-pentène, 2,3,3,4,4,5,5-heptafluoro-1-pentène, 1,1,3,3,5,5,5-heptafluoro-1-pentène, 1,1,1,2,4,4,4-heptafluoro-3-méthyl-2-butène, 2,4,4,4-tétrafluoro-3-(trifluorométhyl)-1-butène, 1,4,4,4-tétrafluoro-3-(trifluorométhyl)-1-butène, 1,4,4,4-tétrafluoro-3-(trifluorométhyl)-2-butène, 2,4,4,4-tétrafluoro-3-(trifluorométhyl)-2-butène, 3-(trifluorométhyl)-4,4,4-trifluoro-2-butène, 3,4,4,5,5,5-hexafluoro-2-pentène, 1,1,1,4,4,4-hexafluoro-2-méthyl-2-butène, 3,3,4,5,5,5-hexafluoro-1-pentène, 4,4,4-trifluoro-2-(trifluorométhyl)-1-butène, 1,1,2,3,3,4,4,5,5,6,6,6-dodécafluoro-1-hexène, 1,1,1,2,2,3,4,5,5,6,6,6-dodécafluoro-3-hexène, 1,1,1,4,4,4-hexafluoro-2,3-bis(trifluorométhyl)-2-butène, 1,1,1,4,4,5,5,5-octafluoro-2-trifluorométhyl-2-pentène, 1,1,1,3,4,5,5,5-octafluoro-4-(trifluorométhyl)-2-pentène, 1,1,1,4,5,5,5-heptafluoro-4-(trifluorométhyl)-2-pentène, 1,1,1,4,4,5,5,6,6,6-décafluoro-2-hexène, 1,1,1,2,2,5,5,6,6,6-décafluoro-3-hexène, 3,3,4,4,5,5,6,6,6-nonafluoro-1-hexène, 4,4,4-trifluoro-3,3-bis(trifluorométhyl)-1-butène, 1,1,1,4,4,4-hexafluoro-3-méthyl-2-(trifluorométhyl)-2-butène, 2,3,3,5,5,5-hexafluoro-4-(trifluorométhyl)-1-pentène, 1,1,1,2,4,4,5,5,5-nonafluoro-3-méthyl-2-pentène, 1,1,1,5,5,5-hexafluoro-4-(trifluorométhyl)-2-pentène, 3,4,4,5,5,6,6,6-octafluoro-2-hexène, 3,3,4,4,5,5,6,6-octafluoro-2-hexène, 1,1,1,4,4-pentafluoro-2-(trifluorométhyl)-2-pentène, 4,4,5,5,5-pentafluoro-2-(trifluorométhyl)-1-pentène, 3,3,4,4,5,5,5-heptafluoro-2-méthyl-1-pentène, 1,1,1,2,3,4,4,5,5,6,6,7,7,7-tétradécafluoro-2-heptène, 1,1,1,2,2,3,4,5,5,6,6,7,7,7-tétradécafluoro-2-heptène, 1,1,1,3,4,4,5,5,6,6,7,7,7-tridécafluoro-2-heptène, 1,1,1,2,4,4,5,5,6,6,7,7,7-tridécafluoro-2-heptène, 1,1,1,2,2,4,5,5,6,6,7,7,7-tridécafluoro-3-heptène, 1,1,1,2,2,3,5,5,6,6,7,7,7-tridécafluoro-3-heptène, 4,4,5,5,6,6,6-heptafluoro-2-hexène, 4,4,5,5,6,6,6-heptafluoro-1-hexène, 1,1,1,2,2,3,4-heptafluoro-3-hexène, 4,5,5,5-tétrafluoro-4-(trifluorométhyl)-1-pentène, 1,1,1,2,5,5,5-heptafluoro-4-méthyl-2-pentène, 1,1,1,3-tétrafluoro-2-(trifluorométhyl)-2-pentène, 1,2,3,3,4,4-hexafluorocyclobutène, 3,3,4,4-tétrafluorocyclobutène, 3,3,4,4,5,5-hexafluorocyclopentène, 1,2,3,3,4,4,5,5-octafluorocyclopentène, 1,2,3,3,4,4,5,5,6,6-décafluorocyclohexène, 1,1,1,2,3,4,5,5,5-nonafluoro-4-(trifluorométhyl)-2-pentène, d'éther de pentafluoroéthyltrifluorovinyle, d'éther de trifluorométhyltrifluorovinyle.

15. Composition selon la revendication 5 dans laquelle ledit agent réfrigérant ou fluide de transfert thermique est sélectionné dans le groupe constitué du : 1,2,3,3,3-pentafluoro-1-propène, 1,1,3,3,3-pentafluoro-1-propène, 1,1,2,3,3-pentafluoro-1-propène, 1,2,3,3-tétrafluoro-1-propène, 2,3,3,3-tétrafluoro-1-propène, 1,3,3,3-tétrafluoro-1-propène, 1,1,2,3 -tétrafluoro-1-propène, 1,1,3,3-tétrafluoro-1-propène, 1,2,3,3-tétrafluoro-1-propène, 1,1,1,2,3,4,4,4-octafluoro-2-butène, 1,1,1,2,4,4,4-heptafluoro-2-butène et 1,1,1,4,4,4-hexafluoro-2-butène.

16. Procédé de production de réfrigération, ledit procédé comprenant : l'évaporation de la composition d'agent réfrigérant ou de fluide de transfert thermique selon la revendication 5 à proximité d'un corps à refroidir et la condensation successive de ladite composition.

17. Procédé de production de chaleur, ledit procédé comprenant : la condensation de la composition de l'agent réfrigérant ou du fluide de transfert thermique selon la revendication 5 à proximité du corps à chauffer et l'évaporation successive de ladite composition.

18. Procédé de transfert de chaleur, ledit procédé comprenant le transfert des compositions selon la revendication 5 depuis une source de chaleur vers un puits de chaleur.

19. Appareil de réfrigération utilisant la composition selon la revendication 5.

20. Appareil de conditionnement d'air utilisant la composition selon la revendication 5.
